# EUROPEAN PATENT SPECIFICATION

(11) **EP 2 479 051 B1**
(45) Date of publication and mention of the grant of the patent: **20.07.2016**
(21) Application number: 11151097.0
(22) Date of filing: 17.01.2011
(51) Int. Cl.: B60J 10/00

(54) **Seal arrangement for a vehicle door**
Dichtungsanordnung für eine KFZ-Tür
Arrangement d'étanchéité pour une porte de véhicule

(43) Date of publication of application: 25.07.2012
(73) Proprietor: Volvo Car Corporation, 405 31 Göteborg (SE)
(72) Inventor: Jonsson, Mats, 46230 Vänersborg (SE)
(74) Representative: Kraenzmer, Martin

(56) References cited:
- EP-A1- 1 138 538
- DE-U1-202005 014 894
- FR-A1- 2 940 954
- GB-A- 2 259 729
- JP-A- 2 171 326
- JP-A- H02 227 322
- JP-A- 2000 142 266
- US-A1- 2006 042 170
- US-A1- 2006 082 189
- US-A1- 2008 122 251

## Description

### TECHNICAL FIELD

The present invention relates to a seal strip according to the preamble of claim 1. Moreover, the present invention relates to a vehicle body according to the preamble of claim 10.

### BACKGROUND OF THE INVENTION

A vehicle generally has at least one, though often a plurality of, vehicle doors and each door is generally accommodated in a corresponding opening of the vehicle body. The opening is often at least partially delimited by an opening frame and when the vehicle door is closed, a gap may be present between the door and the opening frame. Such as gap is preferably sealed with a sealing device, which generally is a sealing strip, for instance in order to reduce the noise transmitted to the interior of the vehicle and/or improve the visual appearance of the vehicle. Moreover, the sealing strip may reduce the amount of moisture entering the interior of the vehicle. The sealing strip may be body mounted or door mounted.

US 6,926,944 B2 discloses a door opening trim weather strip which includes a trim portion and a tubular seal portion for contacting a protruding part of a vehicle door. The tubular seal portion includes two base parts.

However, with a trim weather strip according to US 6,926,944 B2, there is a risk that a visible gap nevertheless is obtained between the vehicle door and the opening frame when the door is closed. Moreover, the use of a US 6,926,944 B2 trim weather strip implies that the frame, e.g. cantrail, of the vehicle door should have a significant height in order to obtain a desired sealing function.

GB 2 259 729 A discloses that a weatherstrip for providing a seal around the door of a vehicle is extruded from elastomeric material, having a tubular body portion and a retaining portion extending from the periphery of the body portion. A tubular secondary sealing portion is provided on the periphery of the body portion at a position spaced angularly from the retaining portion.

JP 2000 142266 A discloses a weatherstrip provided with a welt part of almost U-shape cross section assembled to a flange of a door opening edge of a body, and a hollow seal part formed on the vehicle outer side of the welt part and brought into elastic contact with the outer peripheral part of the door when the door is closed.

US 2006/0042170 A1 discloses a door weather strip capable of surely closing a gap between a door of a motor vehicle and a door opening portion of a vehicle body while exhibiting excellent sealing properties with good appearance.

FR 2 940 954 A1 discloses a rabbet that has two sheets superimposed for supporting a sealing joint. Total thickness of a zone is less than the thickness in a remaining zone of the rabbet. One of the sheets of the rabbet comprises a hollow space and projections that are pressed into the sheet in an alternating manner for increasing the total thickness of the rabbet in the zone.

JP 21 71326 A discloses a main seal lip and a sub seal lip that are placed adjacent to each other and formed monolithically on the surface inside a car body of a mounting base part of a door weatherstrip.

DE 20 2005 014894 U1 discloses an edge protection sealing unit, preferably for use as a motor vehicle trunk lid seal comprises a U profile which incorporates clamping lips, and is provided with a sealing strip and a sealing lip.

EP 1 138 538 A1 discloses that inside a first tubular section a smaller second tubular section in a deformable material is housed. The second section is joined by a partition to a portion of the first section. This second section is compressed by deforming under the pressure of the door when closed.

US 2008/122251 A1 discloses an opening trim weather strip that includes a trim portion, a seal portion, and a cover lip integrally formed to the trim portion and extended to a vehicle interior side thereof. The cover lip is formed with a cover lip main body by a sponge member and formed with a cover lip skin layer formed by a solid member at a surface of the cover lip main body.

Finally, document JP 2-227322 is considered as most relevant prior art document.

### SUMMARY OF THE INVENTION

One object of the invention is to reduce or ameliorate at least one of the disadvantages of the prior art, or to provide a useful alternative.

This object is achieved by a seal strip according to claim 1.

As such, the present invention relates to a seal strip for sealing a gap between a vehicle door and an opening frame of a vehicle body. The seal strip comprises an attachment portion adapted to be attached to a flange of the opening frame to thereby attach the seal strip to the opening frame. The seal strip further comprises a first hollow seal portion adapted to abut against a first portion of the vehicle door when the vehicle door is closed.

The seal strip comprises a second hollow seal portion, separate from the first seal portion, adapted to abut against a second portion of the vehicle door when the vehicle door is closed.

By means of a seal strip according to the above, a seal strip may be obtained wherein in each one of the first and second hollow seal portions is designed and positioned in order to serve a specific purpose. Purely by way of example, the first hollow seal portion may be designed so as to provide a primary seal line between the vehicle door and the opening frame - for instance from a soundproofing point of view -whereas the second hollow seal portion, in addition to providing a second seal line between the vehicle door and the opening frame, may be designed so as to provide a smooth transition from the vehicle door to the opening frame.

The smooth transition may be advantageous for a plurality of reasons. For instance, the smooth transition may provide an aesthetically appealing door and opening frame assembly. Moreover, the smooth transition may prevent, or at least reduce the risk of, that dirt or other small objects enters the gap between the door and the opening frame when the door is closed.

Moreover, the provision of two hollow seal portions, which may be designed for different purposes, which thus provides two seal lines implies that an appropriate sealing may be obtained with a reduced height of a contacting portion of the vehicle door and/or the opening frame. Purely by way of example, in embodiments of the present invention, the seal strip may enable that height the cantrail of the vehicle door may be reduced, as compared to the required height, should a traditional seal strip with one single seal line be used instead.

The opening frame may circumscribe an opening centre point and, when the seal strip is attached to the opening frame, the second hollow seal portion may be located closer to the opening centre point than the first hollow seal portion.

When the vehicle door is closed, the first hollow seal portion may be adapted to have a first intrusion measure with respect to the vehicle door and the second hollow seal portion may be adapted to have a second intrusion measure with respect to the vehicle door, the first intrusion measure may be at least 1.2, preferably at least 1.5, times greater than the second intrusion measure.

The fact that aseal strip is designed such that the first intrusion measure is greater than the second intrusion measure implies that the first hollow seal portion will provide a major, i.e. more than half of the, contribution to e.g. the soundproofing characteristics of the seal strip.

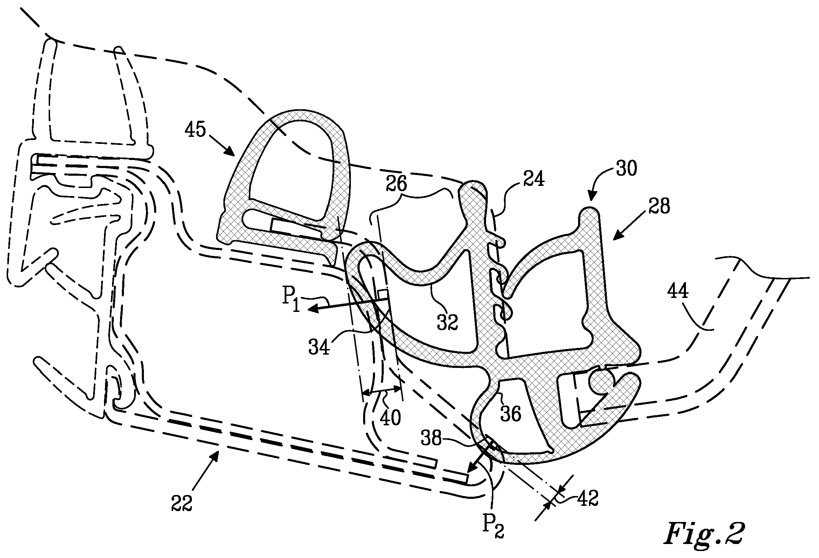

The expression "intrusion measure" is explained in the detailed description hereinbelow with reference to Fig. 2.

A cross-section of the attachment portion may comprise a U-shaped portion which in turn comprises a bottom attachment portion and a first and a second side attachment portion, the first hollow seal portion may be at least partially delimited by the first side attachment portion.

At least one of the first and a second side attachment portion may comprise a grip lip adapted to grip against the flange when the seal strip is attached to the flange.

The second hollow seal portion may be at least partially delimited by the bottom attachment portion.

The seal strip may further comprise a lip seal, the lip seal may be fixedly attached to the second hollow seal portion and may be adapted to contact an outer surface of a roof panel and/or an interior panel of the vehicle body when the seal strip is attached to the opening frame.

At least a portion of the attachment portion may be made of solid rubber and at least a portion of at least one of the first and second hollow seal portions may be made of sponge rubber.

The attachment portion may comprise a carrier made of a material having a modulus of elasticity which is higher than the modulus of elasticity of the remaining portion of the attachment portion.

A second aspect of the present invention relates to a vehicle body comprising an opening frame and a vehicle door. The opening frame comprises a flange and the vehicle body further comprises a seal strip according to the first aspect of the present invention. The seal strip is attached to the flange via the attachment portion.

According to the second aspect of the present invention, the vehicle body may further comprise a vehicle door mounted seal strip for sealing the gap when the vehicle door is closed.

A third aspect of the present invention relates to a vehicle comprising a vehicle body according to the second aspect of the present invention.

### BRIEF DESCRIPTION OF THE DRAWINGS

The present invention will hereinafter be explained in greater detail by means of nonlimiting examples and with reference to the appended drawings in which:
- Fig. 1: illustrates a vehicle comprising a vehicle body;
- Fig. 2: illustrates a first partial cross-section along line II - II of the Fig. 1 vehicle body;
- Fig. 3: illustrates a cross-section of a seal strip, and
- Fig. 4: illustrates a second partial cross-section along line IV - IV of the Fig. 1 vehicle body.
It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

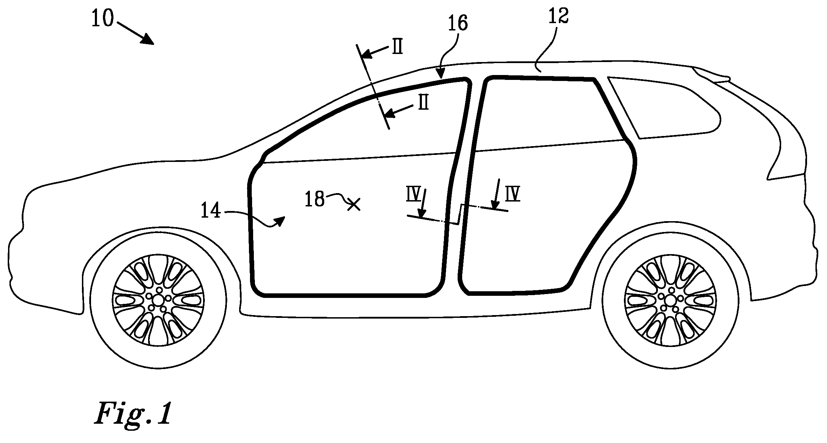

Fig. 1 illustrates a vehicle 10 comprising a vehicle body 12 andavehicle door 14 accommodated in a first opening frame 16. As may be realised from Fig. 1, the opening frame 16 circumscribes an opening centre point 18. The vehicle 10 is in Fig. 1 exemplified as a car, but the present invention may be equally applicable to other types of vehicles such as a truck, a van, a bus,a lorry or similar.
Fig. 2 illustrates a cross-sectionalsectional view of a portion of the Fig. 1 vehicle 10 in whichan upper portion of the first vehicle door 14 contacts an upper portion of the vehicle body 12. As may be gleaned from Fig. 2, the upper portion of the vehicle door 14 comprises a hollow structural member 22 which often is referred to as a cantrail. Moreover, the vehicle body 12 comprises a flange 24. Fig. 2 further illustrates that, when the door is closed, a gap 26 is obtained between the vehicle body 12 and the cantrail 22. Purely by way of example, the gap 26 may be within the range of 1 - 20 mm.

In order to seal the gap 26, the present invention proposes a seal strip 28. The purpose of the seal strip 28 may be to reduce the noise transmitted to the interior of the vehicle 10 and/or improve the visual appearance of the vehicle 10 and/or reduce the amount of moisture entering the interior of the vehicle 10.

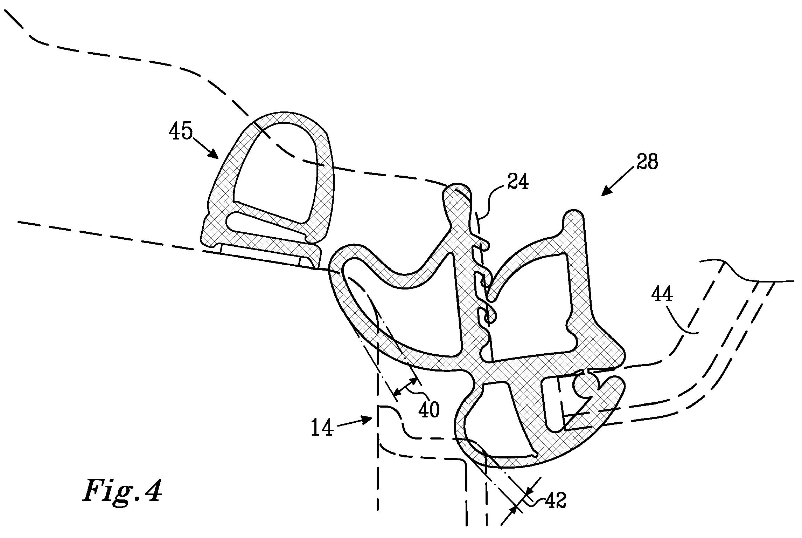

The seal strip comprises an attachment portion 30 adapted to be attached to the flange 24 to thereby attach the seal strip 28 to the opening frame 16.The seal strip further comprises a first hollow seal portion 32 adapted to abut against a first portion 34 of the vehicle door 14 when the vehicle door 14 is closed. Moreover, the seal strip 28 comprises a second hollow seal portion 36, separate from the first seal portion, adapted to abut against a second portion 38 of the vehicle door 14 when the vehicle door 14 is closed. In Fig. 2, for the sake of clarity, the seal strip 28 is illustrated in an initial configuration, i.e. when no portion of the seal strip 28 is deformed by either the vehicle door 14 or the opening frame 16. As such, the vehicle door 14 and the opening frame 16 are illustrated with dashed lines in Fig. 2. The above also applies for Fig. 4 which will be discussed hereinbelow.

As may be gleaned from Fig. 2, thesecond hollow seal portion 36 is located closer to the opening centre point 18 (not shown in Fig. 2) than the first hollow seal portion 32.

The first hollow seal portion 32 may be referred to as a primary seal of the seal strip 28. As such, the first hollow seal portion 32 may be designed so as to provide a major contribution to e.g. the soundproofing characteristics of the seal strip 28. In order to achieve this major contribution of the first hollow seal portion 32, the first hollow seal portion 32 preferably has an intrusion measure which is greater than the intrusion measure of the second hollow seal portion 36.

The expression "intrusion measure" relates to the maximum distancefrom the location of a portion of the seal strip 28 when in an initial, i.e. non-contacting, configuration and the location of a portion of the vehicle door in contact with the corresponding portion of the seal strip when the vehicle door is closed. The distance is measured in a direction normal, i.e. perpendicular, to the extension of the portion of the vehicle door contacting a portion of the seal strip 28.

In Fig. 2, the first hollow seal portion 32 has a first intrusion measure 40 and the second hollow seal portion 36 has a second intrusion measure 42.Using the above definition of the expression "intrusion measure", the first intrusion measure 40 is the maximum distance, in the direction P₁ normal to the extension of the first portion 34 of the vehicle door 14, between the first hollow seal portion 32, when in an initial configuration,and the location of the first portion 34 of the vehicle door 14 when the vehicle door 14 is closed. In a similar vein, the second intrusion measure 42 is the maximum distance, in the direction P₂normal to the extension of the second portion 38 of the vehicle door 14, between the second hollow seal portion 36, when in an initial configuration, and the location of the second portion 36 of the vehicle door 14 when the vehicle door 14 is closed.

As may be gleaned from Fig. 2, the first intrusion measure 40 is greater than the second intrusion measure 42. As has been previously been discussed, the fact that the first intrusion measure 40 is the greater one of the two intrusion measures 40, 42implies that the major part of the sealing function of the seal strip 28 is obtained in the contact between the first hollow seal portion 32 and the first portion 34 of the vehicle door 14. Thus, the second hollow seal portion 36 may be designed with at least a partial focus on providing anaesthetically appealing transition from the vehicle body 12 to the vehicle door 14.Generally, from an aesthetic point of view, it is desired to have a smooth transition from the vehicle body 12 to the vehicle door 14 and a smooth transition is generally facilitated by virtue of a small second intrusion measure 42. This is since a small second intrusion measure 42 implies that thesecond hollow seal portion 36 will be imparted a relatively small amount of deformation when the vehicle door 14 is closed.

The first intrusion measure 40 may be at least 1.2, preferably at least 1.5, more preferred at least 2, times greater than the second intrusion measure 42. In the embodiment illustrated in Fig. 2, the first intrusion measure is approximately 2.5 times greater than the second intrusion measure 42.In the embodiment illustrated Fig. 2, although purely by way of example, the first intrusion measure 40 may be approximately 4.6 mm whereas the second intrusion measure may be approximately 1.8 mm.

The intrusion measure may be determined in a plurality of ways. Purely by way of example, the gap between the vehicle door 14 and the opening frame 16 may firstly, when the seal strip 28 has not yet been attached to the opening frame 16, be determined by inserting a deformable paste (not shown), such as dental paste, in the gap between the door 14 and the opening frame 16 and subsequently closing the vehicle door 14. The paste then assumes the shape of the 26. A cross-section of the gap 26 may then be compared to the cross-section of theseal strip 28 and the intrusion measure may thus be determined by measuring the distance that a portion of the seal strip 28 protrudes from the surface of the deformed paste.

Optionally, as another example, the intrusion measure may be determined by using a computer model of the seal strip 28, the vehicle door 14 and the opening frame 16. For instance, cross-sections of the above members may be imposed on one another in a closed, but not deformed, condition such as is illustrated in Fig. 2, and the intrusion may be directly measured from the computer model. As a third example, the seal strip 28, the vehicle door 14 and the opening frame 16 may be modelled in a finite element method (FEM) computer program and the model may preferably be used for calculating the deformation of at least the seal strip 28 when the vehicle door 14 is closed.Based on the initial and the deformed configurations of the seal strip 28, the intrusion measure may be determined.

Since theseal strip 28 provides two sealing lines between the vehicle body 12 to the vehicle door 14, improved NVH (Noise, Vibration, Harshness) characteristics are obtained for the seal strip 28 as compared to seal strips providing only one sealing line.

Moreover, and as may be realized when studying e.g. Fig. 2, thesecond hollow seal portion 36 may be arranged so as to close, or at least reduce, visible gaps between a panel 44 of the vehicle body 12 and the first hollow seal portion 32 when the vehicle door 14 is closed. The panel 44 may be a roof panel and/or an interior panel.

Furthermore, thesecond hollow seal portion 36 may be arranged so as to prevent, or at least reduce the amount of, visible body colour of the vehicle door 14 when the vehicle door 14 is closed.

Additionally, by virtue of the provision of the second hollow seal portion 36, the amount of seal strip 28 material which is visible to an occupant of the vehicle is reduced.

Further, the seal strip 28 in Fig. 2 with the two sealing lines implies that the cantrail22 of the vehicle door 14 may be designed with a lower height than the height that would have been required, had a seal strip (not shown) with only one sealing line been used instead. This is since the seal strip 28 comprises two sealing strips which may be designed and positioned separatelyresulting in that a more compact total assembly may be obtained.

Fig. 2 also illustrates that a sealing arrangement between the vehicle door 14 and the vehicle body 12 may comprise the previously discussedseal strip 28 as well as a door mounted seal strip 45 which thus may provide a third seal line.

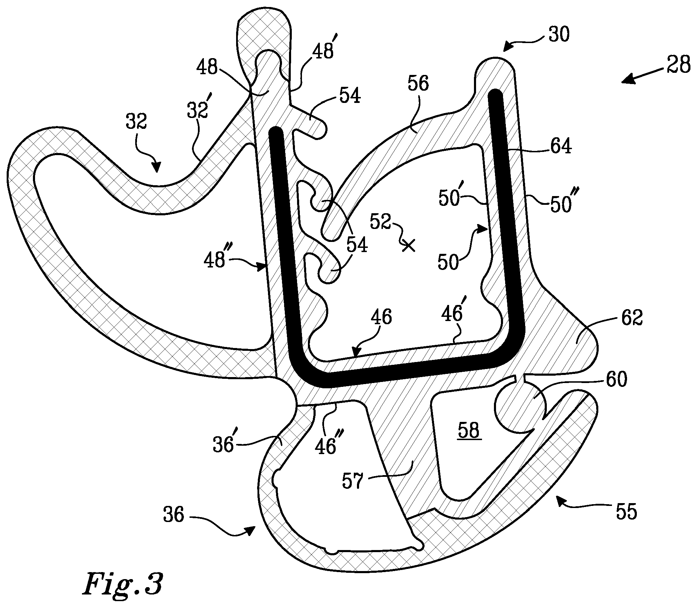

Fig. 3 illustrates a cross-section of the seal strip 28 used in Fig. 2. As has been previously discussed, the seal strip 28 comprises an attachment portion 30, a first hollow seal portion 32 and a second hollow seal portion 36.

As may be gleaned from Fig. 3, the cross-section of the attachment portion 30 of the illustrated embodiment of the seal strip 28 comprises a U-shaped portion which in turn comprises a bottom attachment portion 46 and a first 48 and a second 50 side attachment portion. Each one of the above portions has an inner portion side 46', 48', 50' facing acentre point 52 of the U-shaped portion portion. Moreover, each one of the above portions has an outer portion side 46", 48", 50" facing away from the centre point 52.

Further, the first hollow seal portion 32 is at least partially delimited by the first side attachment portion 48. In the embodiment of theseal strip 28 illustrated in Fig. 3, the first hollow seal portion 32 is obtained by connecting a loop 32' of a first material to the outer side 48" of the first side attachment portion 48. Purely by way of example, the first material may be sponge rubber.

In embodiments of the seal strip 28 of the present invention, at least one of the first 48 and the second 50 side attachment portion comprises a grip lip 54, 56 adapted to grip against the flange (not shown in Fig. 3) when the seal strip 28 is attached to the flange.

In the embodiment of the seal strip 28 illustrated in Fig. 3, the attachment portion 30 comprises three grip lips 54 each one of which beingconnected to the inner portion 48' of the first side attachment portion 48 and one grip lip 56 which is connected to the inner portion 50' of the second side attachment portion 50. However, in other embodiments of the seal strip 28, each one of the first 48 and second 50 side attachment portions may be provided with more or fewer grip lips than what is indicated in Fig. 3.

Moreover, in the Fig. 3 embodiment of the seal strip 28, the second hollow seal portion 36 is at least partially delimited by the bottom attachment portion 46.In the embodiment of theseal strip 28 illustrated in Fig. 3, the second hollow seal portion 36 is obtained by connecting a second loop 36' of a first material to the outer side 46" of the bottom attachment portion 46.Further, Fig. 3 illustrates that the embodiment of the seal strip 28 disclosed therein also comprises a lip seal 55. As previously indicated, although purely by way of example, the first material may be sponge rubber.

As may be realized from Fig. 3, the illustrated embodiment of the seal strip 28 comprises a protrusion portion 57 extending from the outer portion side 46" of the bottom attachment portion 46. The protrusion portion 57 partially delimits the second hollow seal portion 36 such that at least portions of the second loop 36', the protrusion portion 57 and the bottom attachment portion 46 form the second hollow seal portion 36.

Moreover, the protrusion portion 57 also forms a portion of the lip seal 55. As may be realized from Fig. 3, a portion of the second loop 36' may extend over a portion of the protrusion portion 57 so as to form a composite lip seal 55. The lip seal 55 and the attachment portion 30 at least partially delimit a cavity 58 in which a portion of the roof panel and/or interior panel (not shown in Fig. 3) may be introduced, see e.g. Fig. 2.

The fact that the protrusion portion 57 may be made of solid rubber, rather than sponge rubber, has the advantage that the distance between the lip seal 55 and the attachment portion 30 may be maintained, or at least reduced only to a small extent, during a procedure of mounting the seal strip 28 to the opening frame 16.

The Fig. 3 embodiment of the seal strip 28 also comprises a connection portion 60 adapted to connect the lip seal 55 and the attachment portion 30 before the roof panel and/or interior panel 44 has been introduced into the cavity 58.The connection portion 60 may be adapted to rupture, such that the connection between the lip seal 55 and the attachment portion 30 is removed prior to, or when, a roof panel and/or interior panel (not shown in Fig. 3) is introduced into the cavity 58.

Moreover, the attachment portion 30 may comprise a shoulder 62 against which a portion of a roof panel and/or interior panel (not shown in Fig. 3) may abut. However, in other (not shown)embodiments of the seal strip, the shoulder 62 may be omitted.

The attachment portion 30, the protrusion portion 57, the connection portion 60 and the shoulder 62 are made of a second material which is not the same as the first material. The first material is softer than the second material. Purely by way of example, the second material may be solid rubber and the first material may be sponge rubber.

Fig. 3 also indicates that the attachment portion 30 may comprise a carrier 64,extending along at least a length of the seal, adapted to reinforce the attachment portion 30. The carrier 64 may have a substantially U-shaped cross-section and may be made of a third material having modulus of elasticity which is higher than the modulus of elasticity of the first and second materials, respectively. Purely by way of example, the third material may be a metal such as steel.

The seal strip 28 of the present invention may for instance be manufactured in an extrusion process.

Fig. 4 illustrates a cross-sectional sectional view of a portion of the Fig. 1 vehicle 10 in which a side portion of the first vehicle door 14 contacts a side portion of the vehicle body 12. As may be realized from Fig. 4, the ratio between the first intrusion measure and the second intrusion measure is smaller than in the Fig. 2 location of the seal strip 28. In Fig. 4, the first intrusion measure 40 is approximately 1.6 times greater than the second intrusion measure 42.In the embodiment illustrated Fig. 4, although purely by way of example, the first intrusion measure 40 may be approximately 3.4 mm whereas the second intrusion measure may be approximately 2.1 mm.

As such, when comparing Fig. 2 and Fig. 4, it should be noted that the intrusion measures 40, 42 may vary along the opening frame 16. Moreover, the ratio between the first and second intrusion measures 40, 42 may vary along the opening frames 16.

Finally, it should be recognized that structures and/or elements and/or method steps shown and/or described in connection with any disclosed form or embodiment of the invention may be incorporated in any other disclosed or described or suggested form or embodiment as a general matter of design choice. However, the scope of protection is defined by the appended claims.

## Claims

1. A seal strip (28) for sealing a gap (26) between a vehicle door (14) and an opening frame (16) of a vehicle body (12), said seal strip (28) comprising an attachment portion (30) adapted to be attached to a flange (24) of said opening frame (16) to thereby attach said seal strip (28) to said opening frame (16), said seal strip (28) further comprising a first hollow seal portion (32) adapted to abut against a first portion (34) of said vehicle door (14) when said vehicle door (14) is closed, said seal strip (28) comprising a second hollow seal portion (36), separate from said first seal portion (32), adapted to abut against a second portion (38) of said vehicle door (14) when said vehicle door (14) is closed, wherein a cross-section of said attachment portion (30) comprises a U-shaped portion which in turn comprises a bottom attachment portion (46) and a first (48) and a second (50) side attachment portion, said first hollow seal portion (32) being at least partially delimited by said first side attachment portion (48), said second hollow seal portion (36) being at least partially delimited by said bottom attachment portion (46), whe re i n when said vehicle door (14) is closed, said first hollow seal portion (32) is adapted to have a first intrusion measure (40) with respect to said vehicle door (14) and said second hollow seal portion (36) is adapted to have a second intrusion measure (42) with respect to said vehicle door (14), said first intrusion measure (40) being at least 1.2, preferably at least 1.5, times greater than said second intrusion measure (42), **characterized in that** said second hollow seal portion (36) is obtained by connecting a second loop (36') of a first material to an outer side (46") of said bottom attachment portion (46) facing away from a centre point (52) of said U-shaped portion, and **in that** said seal strip (28) comprises a protrusion portion (57) extending from said outer side (46") of the bottom attachment portion (46), which protrusion portion (57) partially delimits said second hollow seal portion (36) such that at least portions of said second loop (36'), said protrusion portion (57) and said bottom attachment portion (46) form said second hollow seal portion (36), wherein said protrusion portion (57) is of a second material, said first material being softer than said second material.

2. The seal strip (28) according to claim 1, wherein said opening frame (16) circumscribes an opening centre point (18) and, when said seal strip (28) is attached to said opening frame (16), said second hollow seal portion (36) is located closer to said opening centre point (18) than said first hollow seal portion (32).

3. The seal strip (28) according to any one of the preceding claims, wherein at least one of said first (48) and second (50) side attachment portions comprises a grip lip (54; 56) adapted to grip against said flange (24) when said seal strip (28) is attached to said flange (24).

4. The seal strip (28) according to any one of the preceding claims, wherein said seal strip (28) further comprises a lip seal (55), said lip seal (55) being fixedly connected to said second hollow seal portion (36) and being adapted to contact an outer surface of a roof panel and/or interior panel (44) of said vehicle body (12) when said seal strip (28) is attached to said opening frame (16).

5. The seal strip (28) according to any one of the preceding claims, wherein at least a portion of said attachment portion (30) is made of solid rubber and at least a portion of at least one of said first (32) and second (36) hollow seal portions is made of sponge rubber.

6. The seal strip (28) according to any one of the preceding claims, wherein said attachment portion (30) comprises a carrier (64) made of a material having a modulus of elasticity which is higher than the modulus of elasticity of the remaining portion of the attachment portion (30).

7. A vehicle body (12) comprising an opening frame (16) and a vehicle door (14), said opening frame (16) comprising a flange (24), **characterized in that** said vehicle body (12) further comprises a seal strip (28) according to any one of the preceding claims, said seal strip (28) being attached to said flange (24) via said attachment portion (30).

8. The vehicle body (12) according to claim 7, wherein said vehicle body (12) further comprises a vehicle door mounted seal strip (45) for sealing said gap when said vehicle door (14) is closed.

9. A vehicle (10) comprising a vehicle body (12) according to claim 7 or 8.

## Patentansprüche

1. Dichtungsband (28) zum Abdichten eines Spalts (26) zwischen einer Fahrzeugtür (14) und einem Öffnungsrahmen (16) eines Fahrzeugkörpers (12), wobei das Dichtungsband (28) umfasst: einen Befestigungsabschnitt (30), der zum Befestigen an einem Flansch (24) des Öffnungsrahmens (16) ausgelegt ist, um so das Dichtungsband (28) an dem Öffnungsrahmen (16) zu befestigen, wobei das Dichtungsband (28) ferner einen ersten hohlen Dichtungsabschnitt (32) umfasst, der zum Angrenzen an einen ersten Abschnitt (34) der Fahrzeugtür (14) ausgelegt ist, wenn die Fahrzeugtür (14) geschlossen ist, wobei das Dichtungsband (28) einen zweiten hohlen Dichtungsabschnitt (36) separat von dem ersten Dichtungsabschnitt (32) umfasst, der zum Angrenzen an einen zweiten Abschnitt (38) der Fahrzeugtür (14) ausgelegt ist, wenn die Fahrzeugtür (14) geschlossen ist, wobei ein Querschnitt des Befestigungsabschnitts (30) einen U-förmigen Abschnitt umfasst, der wiederum einen unteren Befestigungsabschnitt (46) und einen ersten (48) und einen zweiten (50) Seitenbefestigungsabschnitt umfasst, wobei der hohle Dichtungsabschnitt (32) mindestens teilweise von dem ersten Seitenbfestigungsabschnitt (48) begrenzt ist, wobei der zweite hohle Dichtungsabschnitt (36) mindestens teilweise von dem unteren Befestigungsabschnitt (46) begrenzt ist, wobei, wenn die Fahrzeugtür (14) geschlossen ist, der erste hohle Dichtungsabschnitt (32) ausgelegt ist, um ein erstes Eindringungsmaß (40) bezüglich der Fahrzeugtür (14) aufzuweisen und der zweite hohle Dichtungsabschnitt (36) ausgelegt ist, ein zweites Eindringungsmaß (42) bezüglich der Fahrzeugtür (14) aufzuweisen, wobei das Eindringungsmaß (40) mindestens das 1,2-fache, vorzugsweise mindestens das 1,5-fache des zweiten Eindringungsmaßes (42) beträgt, **dadurch gekennzeichnet, dass** der zweite hohle Dichtungsabschnitt (36) durch Verbinden einer zweiten Schlaufe (36') eines ersten Materials mit einer äußeren Seite (46") des unteren Befestigungsabschnitts (46) erhalten wird, die weg von einem Mittelpunkt (52) des U-förmigen Abschnitts weist, und dadurch, dass das Dichtungsband (28) einen Vorsprungabschnitt (57) umfasst, der sich von der äußeren Seite (46") des unteren Befestigungsabschnitts (46) erstreckt, wobei der Vorsprungabschnitt (57) den zweiten hohlen Dichtungsabschnitt (36) teilweise begrenzt, sodass mindestens Abschnitte der zweiten Schlaufe (36'), der Vorsprungabschnitt (57) und der untere Befestigungsabschnitt (46) den zweiten hohlen Dichtungsabschnitt (36) bilden, wobei der Vorsprungabschnitt (57) aus einem zweiten Material hergestellt ist, wobei das erste Material weicher als das zweite Material ist.

2. Dichtungsband (28) nach Anspruch 1, wobei der Öffnungsrahmen (16) einen Öffnungsmittelpunkt (18) umschreibt und wobei, wenn das Dichtungsband (28) an dem Öffnungsrahmen (16) befestigt ist, der zweite hohle Dichtungsabschnitt (36) näher von dem Öffnungsmittelpunkt (18) angeordnet ist als der erste hohle Dichtungsabschnitt (32).

3. Dichtungsband (28) nach einem der vorhergehenden Ansprüche, wobei mindestens entweder der erste (48) oder zweite (50) Seitenbefestigungsabschnitt eine Grifflippe (54; 56) umfasst, die zum Greifen des Flansches (24) ausgelegt ist, wenn das Dichtungsband (28) am Flansch (24) befestigt ist.

4. Dichtungsband (28) nach einem der vorhergehenden Ansprüche, wobei das Dichtungsband (28) ferner eine Lippendichtung (55) umfasst, wobei die Lippendichtung (55) fest mit dem zweiten hohlen Dichtungsabschnitt (36) verbunden ist und ausgelegt ist, um mit der äußeren Oberfläche einer Dachplatte und/oder einer inneren Platte (44) des Fahrzeugkörpers (12) in Kontakt zu treten, wenn das Dichtungsband (28) am Öffnungsrahmen (16) befestigt ist.

5. Dichtungsband (28) nach einem der vorhergehenden Ansprüche, wobei mindestens ein Abschnitt des Befestigungsabschnitts (30) aus Vollgummi und mindestens ein Abschnitt mindestens des ersten (32) und zweiten (36) hohlen Dichtungsabschnitts aus Moosgummi hergestellt ist.

6. Dichtungsband (28) nach einem der vorhergehenden Ansprüche, wobei der Befestigungsabschnitt (30) einen Träger (64) aus einem Material umfasst, das ein Elastizitätsmodul aufweist, das höher als das Elastizitätsmodul des übrigen Abschnitts des Befestigungsabschnitts (30) ist.

7. Fahrzeugkörper (12), umfassend einen Öffnungsrahmen (16) und eine Fahrzeugtür (14), wobei der Öffnungsrahmen (16) einen Flansch (24) umfasst, **dadurch gekennzeichnet, dass** der Fahrzeugkörper (12) ferner ein Dichtungsband (28) nach einem der vorherigen Ansprüche umfasst, wobei das Dichtungsband (28) an dem Flansch (24) über den Befestigungsabschnitt (30) befestigt ist.

8. Fahrzeugkörper (12) nach Anspruch 7, wobei der Fahrzeugkörper (12) ferner ein an der Fahrzeugtür montiertes Dichtungsband (45) zum Abdichten des Spalts umfasst, wenn die Fahrzeugtür (14) geschlossen ist.

9. Fahrzeug (10), umfassend einen Fahrzeugkörper (12) nach einem der Ansprüche 7 oder 8.

## Revendications

1. Bande formant joint d'étanchéité (28) servant à obturer un espace (26) entre une portière de véhicule (14) et un encadrement d'ouverture (16) d'une carrosserie de véhicule (12), ladite bande formant joint d'étanchéité (28) comprenant une partie de fixation (30) conçue pour être fixée à une bride (24) dudit encadrement d'ouverture (16) de façon à fixer ainsi ladite bande formant joint d'étanchéité (28) audit encadrement d'ouverture (16), ladite bande formant joint d'étanchéité (28) comprenant en outre une première partie de joint d'étanchéité creuse (32) conçue pour être accolée à une première partie (34) de ladite portière de véhicule (14) lorsque ladite portière de véhicule (14) est fermée, ladite bande formant joint d'étanchéité (28) comprenant une seconde partie de joint creuse (36), séparée de ladite première partie de joint (32), conçue pour être accolée à une seconde partie (38) de ladite portière de véhicule (14) lorsque ladite portière de véhicule (14) est fermée, une section transversale de ladite partie de fixation (30) comprenant une partie en forme de U qui comprend à son tour une partie de fixation inférieure (46) et des première (48) et seconde (50) parties de fixation latérales, ladite première partie de joint creuse (32) étant au moins partiellement délimitée par ladite première partie de fixation latérale (48), ladite seconde partie de joint creuse (36) étant au moins partiellement délimitée par ladite partie de fixation inférieure (46), ladite première partie de joint creuse (32) étant conçue pour présenter un premier degré de pénétration (40) vis-à-vis de ladite portière de véhicule (14) et ladite seconde partie de joint creuse (36) étant conçue pour présenter un second degré de pénétration (42) vis-à-vis de ladite portière de véhicule (14), lorsque ladite portière de véhicule (14) est fermée, ledit premier degré de pénétration (40) étant au moins 1,2, de préférence au moins 1,5 fois supérieur audit second degré de pénétration (42), **caractérisée en ce que** ladite seconde partie de joint creuse (36) est obtenue en raccordant une seconde boucle (36') d'un premier matériau à un côté extérieur (46") de ladite partie de fixation inférieure (46) orienté dans une direction s'éloignant d'un point central (52) de ladite partie en forme de U, et **en ce que** ladite bande formant joint d'étanchéité (28) comprend une partie saillante (57) s'étendant à partir dudit côté extérieur (46") de la partie de fixation inférieure (46), ladite partie saillante (57) délimitant partiellement ladite seconde partie de joint creuse (36) de telle sorte qu'au moins des parties de ladite seconde boucle (36'), ladite partie saillante (57) et ladite partie de fixation inférieure (46) forment ladite seconde partie de joint creuse (36), ladite partie saillante (57) étant constituée d'un second matériau, ledit premier matériau étant plus souple que ledit second matériau.

2. Bande formant joint d'étanchéité (28) selon la revendication 1, dans laquelle ledit encadrement d'ouverture (16) circonscrit un point central d'ouverture (18) et ladite seconde partie de joint creuse (36) est située plus près dudit point central d'ouverture (18) que ladite première partie de joint creuse (32) lorsque ladite bande formant joint d'étanchéité (28) est fixée audit encadrement d'ouverture (16).

3. Bande formant joint d'étanchéité (28) selon l'une quelconque des revendications précédentes, dans laquelle au moins une desdites première (48) et seconde (50) parties de fixation latérales comprend une lèvre d'adhérence (54 ; 56) conçue pour adhérer à ladite bride (24) lorsque ladite bande formant joint d'étanchéité (28) est fixée à ladite bride (24).

4. Bande formant joint d'étanchéité (28) selon l'une quelconque des revendications précédentes, ladite bande formant joint d'étanchéité (28) comprenant en outre un joint à lèvre (55), ledit joint à lèvre (55) étant raccordé de manière fixe à ladite seconde partie de joint creuse (36) et étant conçu pour venir en contact avec une surface extérieure d'un panneau de toit et/ou d'un panneau intérieur (44) de ladite carrosserie de véhicule (12) lorsque ladite bande formant joint d'étanchéité (28) est fixée audit encadrement d'ouverture (16).

5. Bande formant joint d'étanchéité (28) selon l'une quelconque des revendications précédentes, dans laquelle au moins une partie de ladite partie de fixation (30) est constituée de caoutchouc plein et au moins une partie d'au moins une desdites première (32) et seconde (36) parties de joint creuses est constituée d'un caoutchouc spongieux.

6. Bande formant joint d'étanchéité (28) selon l'une quelconque des revendications précédentes, dans laquelle ladite partie de fixation (30) comprend un support (64) constitué d'un matériau présentant un module d'élasticité qui est supérieur au module d'élasticité de la partie restante de la partie de fixation (30).

7. Carrosserie de véhicule (12) comprenant un encadrement d'ouverture (16) et une portière de véhicule (14), ledit encadrement d'ouverture (16) comprenant une bride (24), **caractérisée en ce que** ladite carrosserie de véhicule (12) comprend en outre une bande formant joint d'étanchéité (28) selon l'une quelconque des revendications précédentes, ladite bande formant joint d'étanchéité (28) étant fixée à ladite bride (24) par l'intermédiaire de ladite partie de fixation (30).

8. Carrosserie de véhicule (12) selon la revendication 7, ladite carrosserie de véhicule (12) comprenant en outre une bande formant joint d'étanchéité (45) montée sur la portière du véhicule et servant à obturer ledit espace lorsque ladite portière de véhicule (14) est fermée.

9. Véhicule (10) comprenant une carrosserie de véhicule (12) selon la revendication 7 ou 8.
